# EUROPÄISCHE PATENTSCHRIFT

(11) **EP 1 970 256 B1**
(45) Veröffentlichungstag und Bekanntmachung des Hinweises auf die Patenterteilung: **15.01.2014**
(21) Anmeldenummer: 08004258.3
(22) Anmeldetag: 07.03.2008
(51) Int. Cl.: B60R 13/00, C25D 11/24, B05D 7/14, C09D 183/00, C23C 22/56, C23C 28/00

(54) **Kraftfahrzeug-Bauteil mit Sol-Gel-Beschichtung**
Motor vehicle component with sol-gel coating
Composant de véhicule doté d'un revêtement sol-gel

(30) Priorität: 16.03.2007 DE 102007014444; 27.02.2008 DE 102008011296
(43) Veröffentlichungstag der Anmeldung: 17.09.2008
(73) Patentinhaber: Süddeutsche Aluminium Manufaktur GmbH, 89558 Böhmenkirch (DE)
(72) Erfinder:
(74) Vertreter: Grosse, Rainer

(56) Entgegenhaltungen:
- EP-A1- 0 410 003
- EP-A1- 0 802 267
- EP-A1- 1 154 289
- EP-A1- 1 457 267
- EP-A1- 1 785 748
- EP-A2- 1 642 745
- WO-A1-01/32965
- WO-A2-02/066727
- DE-A1- 10 027 265
- US-A1- 2004 004 003

## Beschreibung

Die Erfindung betrifft ein Kraftfahrzeug-Bauteil, insbesondere Kraftfahrzeug-Anbauteil, bevorzugt ein Kraftfahrzeug-Außenbauteil, besonders bevorzugt ein Kraftfahrzeugzierteil, aus eloxiertem Aluminium oder eloxierter Aluminiumlegierung mit den Merkmalen des Oberbegriffs des Anspruchs 1. Die Erfindung betrifft zudem ein Kraftfahrzeug mit einem derartigen Kraftfahrzeug-Bauteil.

Herkömmliche Kraftfahrzeug-Bauteile aus Aluminium sind poliert oder eloxiert. Diese Bauteile sind mechanischen und chemischen Belastungen ausgesetzt. Beispielsweise kommen derartige Bauteile beim Waschen des Kraftfahrzeugs mit Reinigungsmitteln in Berührung. Wenn die verwendeten Reinigungsmittel aggressive Wirkungen entfalten, führt dies zu einer sichtbaren Beeinträchtigung der Oberfläche der Kraftfahrzeug-Bauteile.

Aufgabe der Erfindung ist es deshalb, ein Kraftfahrzeug-Bauteil zu schaffen, dessen Oberfläche eine hohe Beständigkeit gegen Umwelteinflüsse und sonstige Belastungen, insbesondere Säuren, Laugen und Lösungsmitteln, aufweist.

Diese Aufgabe wird erfindungsgemäß mit einem Kraftfahrzeug-Bauteil mit den Merkmalen des Anspruchs 1 gelöst. Dabei ist vorgesehen, dass die Sol-Gel-Beschichtung eine Hybrid-Beschichtung mit organischen und anorganischen Inhaltsstoffen ist, wobei die organischen Inhaltsstoffe Stoffe aus der Phenyl-Gruppe oder der Methacrylat-Gruppe sind und die anorganische Inhaltsstoffe Polyuretansilane sind, und wobei die Sol-Gel-Beschichtung durch Zusatz von Zusatzstoffen eine farbige Beschichtung ist.

Das Bauteil ist insbesondere nach dem Eloxalvorgang - mindestens teilweise - mit einer Sol-Gel-Beschichtung versehen. Unter einer Sol-Gel-Beschichtung ist insbesondere eine kolloidale Lösung (Sol) anorganischer, katalytischer Siliziumoxid-Partikel zu verstehen, wobei die Lösung durch Gelation in ein Gel umgewandelt wird und als Beschichtung für ein insbesondere eloxiertes Kraftfahrzeug-Bauteil aus Aluminium oder Aluminiumlegierung verwendet wird. Mithin bildet die Sol-Gel-Beschichtung auf dem Kraftfahrzeug-Bauteil einen Coatingfilm aus.

Es ist vorgesehen, dass die Sol-Gel-Beschichtung eine Hybrid-Beschichtung mit organischen und anorganischen Inhaltsstoffen ist.

Insbesondere ist vorgesehen, dass die Inhaltsstoffe Zusatzstoffe sind. In Abhängigkeit von den verwendeten organischen und/oder anorganischen Inhaltsstoffen lassen sich zusätzliche Oberflächeneffekte des Kraftfahrzeug-Bauteils variieren, sodass zum Beispiel hieraus eine sehr leicht zu reinigende Oberfläche bis zu einer Feuchtigkeit abweisenden Oberfläche (Lotusblüteneffekt) erzielt werden kann.

Die in der Hybrid-Beschichtung enthaltenen organischen Inhaltsstoffe sind Stoffe folgender Gruppen: Phenyl-Gruppen oder Methacrylat-Gruppen.

Die in der Hybrid-Beschichtung enthaltenen anorganischen Inhaltsstoffe sind Polyuretansilane. Zusätzlich können anorganische Inhaltsstoffe Epoxysilane aufweisen.

Ferner kann die Sol-Gel-Beschichtung als wasserklare, transparente Sol-Gel-Beschichtung ausgebildet sein. Erfindungsgemäß ist es jedoch vorgesehen, dass die Sol-Gel-Beschichtung durch Zusatz von Zusatzstoffen eine farbige Beschichtung ist. Dabei können ihr farbige Zusatzstoffe, insbesondere Pigmente, zugesetzt werden, um eine farbige Ausgestaltung der Oberfläche zu erzielen.

Aufgrund der erfindungsgemäßen Sol-Gel-Beschichtung besteht für das Kraftfahrzeug-Bauteil, das aus eloxiertem Aluminium oder einer eloxierten Aluminiumlegierung besteht, ein sehr guter Eigen-UV-Schutz, das heißt, es liegt eine hohe UV-Beständigkeit vor. Ferner ist die Oberfläche durch die Beschichtung extrem beständig, insbesondere kratzfest.

Nach einer Weiterbildung der Erfindung ist vorgesehen, dass die Sol-Gel-Beschichtung eine silikatische Sol-Gel-Beschichtung ist.

Nach einer Weiterbildung der Erfindung ist vorgesehen, dass die Sol-Gel-Beschichtung eine Dicke von 0,5 µm bis 5 µm aufweist.

Die Erfindung betrifft ferner ein Kraftfahrzeug mit einem Kraftfahrzeug-Bauteil, das eine Sol-Gel-Beschichtung gemäß vorstehender Ausführungen aufweist. Bei dem Kraftfahrzeug-Anbauteil handelt es sich beispielsweise um eine Fensterschachtabdeckung, eine Dachreling oder eine Zierleiste eines Kraftfahrzeugs, wobei das Kraftfahrzeug-Bauteil aus Aluminium oder einer Aluminiumlegierung besteht. Die Oberfläche des Kraftfahrzeug-Bauteils ist eloxiert. Das Kraftfahrzeug-Bauteil ist insbesondere außen, zumindest teilweise, mit einer Sol-Gel-Beschichtung versehen. Durch diese Beschichtung besteht eine hohe chemische Beständigkeit gegen die meisten Säuren, Laugen und Lösungsmittel. Die Sol-Gel-Beschichtung weist eine geschlossenporige Oberfläche auf und ist nicht nur korrosions-, witterungs- und lichtbeständiger, sondern kann sich darüber hinaus durch weitere Merkmale, wie insbesondere starke Schmutzabweisung und leichte Reinigbarkeit auszeichnen. Es ist auch möglich, die Sol-Gel-Beschichtung als glänzende oder als matte Beschichtung auszuführen. Auch ein Seidenmatteffekt ist möglich.

Bei einem bevorzugten Ausführungsbeispiel ist vorgesehen, dass das Kraftfahrzeug-Anbauteil im Tauchverfahren mit der Sol-Gel-Beschichtung versehen wird. Alternativ und in Abhängigkeit zur beschichteten Bauteilgeometrie ist auch ein Aufsprühen der Sol-Gel-Beschichtung oder ein Auftragen der Sol-Gel-Beschichtung durch Walzen möglich. Durch diese Art der Aufbringung wird eine besonders konstante Schichtdicke erzielt.

Es ist ferner vorteilhaft, wenn die Sol-Gel-Beschichtung eine Dicke von 0,5 µm bis 5 µm aufweist, sodass nur relativ wenig Beschichtungsmaterial verwendet werden muss und gleichwohl die vorstehend genannten guten Ergebnisse erzielt werden.

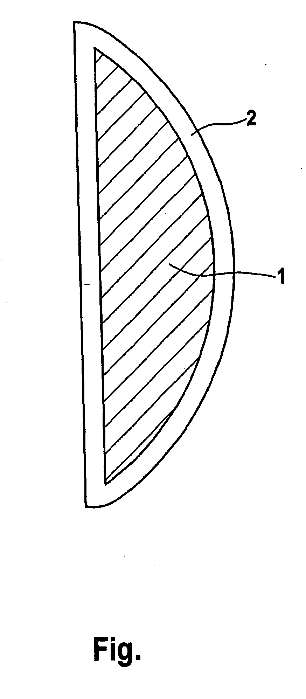

Die Zeichnung veranschaulicht die Erfindung anhand eines Ausführungsbeispiels. Die Figur zeigt den Querschnitt eines Kraftfahrzeug-Bauteils, beispielsweise einer Zierleiste 1, die aus Aluminium besteht. Die Oberfläche der Zierleiste 1 ist eloxiert. Dabei kann eine farblose oder eine farbige Eloxierung vorgesehen sein. Insbesondere ist vorgesehen, dass durch die Art und Zeitdauer der Eloxierung eine bestimmte Rauhigkeit der Oberfläche eingestellt wird. Nach dem Eloxieren wird auf die Zierleiste 1 eine Sol-Gel-Beschichtung durch Spritzen, Rollen, Tauchen, Rakeln und/oder Walzen aufgebracht und durch einen Temperprozess ausgehärtet. Die Sol-Gel-Beschichtung 2 ist unbrennbar sowie hitze- und feuerbeständig. Im Brandfalle bilden sich ausgehend von der Beschichtung 2 keinerlei Gase. Das Beschichtungsmaterial umfasst vorzugsweise ausschließlich anorganische Bestandteile. Alternativ ist es jedoch auch möglich, dass organische Bestandteile vorhanden sind. Auch eine Kombination von organischen und anorganischen Bestandteilen ist möglich.

## Patentansprüche

1. Kraftfahrzeug-Bauteil, insbesondere Kraftfahrzeug-Anbauteil, bevorzugt Kraftfahrzeug-Außenbauteil, besonders bevorzugt Kraftfahrzeugzierteil, aus eloxiertem Aluminium oder eloxierter Aluminiumlegierung, weiches - zumindest teilweise - mit einer Sol-Gel-Beschichtung (2) versehen ist, **dadurch gekennzeichnet, dass** die Sol-Gel-Beschichtung (2) eine Hybrid-Beschichtung mit organischen und anorganischen Inhaltsstoffen ist, wobei die organischen Inhaltsstoffe Stoffe aus der Phenylgruppe oder der Methacrylatgruppe sind und die anorganischen Inhaltsstoffe Polyurethansilane sind, und wobei die Sol-Gel-Beschichtung (2) durch Zusatz von Zusatzstoffen eine farbige Beschichtung ist.

2. Kraftfahrzeug-Bauteil nach Anspruch 1, **dadurch gekennzeichnet, dass** die Sol-Gel-Beschichtung (2) eine silikatische Sol-Gel-Beschichtung ist.

3. Kraftfahrzeug-Bauteil nach einem der vorhergehenden Ansprüche, **dadurch gekennzeichnet, dass** die Sol-Gel-Beschichtung (2) zusätzlich mit organischen und/oder anorganischen Inhaltsstoffen versehen ist.

4. Kraftfahrzeug-Bauteil nach einem der vorhergehenden Ansprüche, **dadurch gekennzeichnet, dass** die Sol-Gel-Beschichtung (2) eine Dicke von 0,5 µm bis 5 µm aufweist.

5. Kraftfahrzeug mit einem Kraftfahrzeug-Bauteil nach einem oder mehreren der vorhergehenden Ansprüche.

## Claims

1. A motor vehicle component, particularly a motor vehicle attachment part, preferably a motor vehicle exterior component, particularly preferred a motor vehicle trim component, made of anodized aluminium or an anodized aluminium alloy, the component being at least partially provided with a sol-gel coating (2), **characterised in that** the sol-gel coating is a hybrid coating including organic and inorganic ingredients, wherein the organic ingredients are substances of the phenyl group or of the methacrylic group and the inorganic ingredients are polyurethane silanes, and wherein the sol-gel coating (2) is a colour coating by adding additives.

2. Motor vehicle component according to claim 1, **characterised in that** the sol-gel coating (2) is a siliceous sol-gel coating.

3. Motor vehicle component according to any one of the preceding claims, **characterised in that** the sol-gel coating (2) is additionally provided with organic and/or inorganic ingredients.

4. Motor vehicle component according to any one of the preceding claims, **characterised in that** the sol-gel coating (2) has a thickness of 0.5 µm to 5 µm.

5. Motor vehicle with a motor vehicle component according to one or more of the preceding claims.

## Revendications

1. Composant de véhicule automobile, notamment pièce rapportée de véhicule automobile, de préférence composant externe de véhicule automobile, de manière particulièrement préférée pièce d'enjolivure de véhicule automobile, en aluminium anodisé ou alliage d'aluminium anodisé, qui est pourvu au moins partiellement d'un revêtement sol-gel (2), **caractérisé en ce que** le revêtement sol-gel (2) est un revêtement hybride avec des ingrédients organiques et inorganiques, dans lequel les ingrédients organiques sont des substances provenant du groupe des phényles ou du groupe des méthacrylates et les ingrédients inorganiques sont des polyuréthanesilanes, et dans lequel le revêtement sol-gel (2) est un revêtement coloré par l'ajout d'additifs.

2. Composant de véhicule automobile selon la revendication 1, **caractérisé en ce que** le revêtement sol-gel (2) est un revêtement sol-gel silicique.

3. Composant de véhicule automobile selon l'une quelconque des revendications précédentes, **caractérisé en ce que** le revêtement sol-gel (2) est en outre pourvu d'ingrédients organiques et/ou inorganiques.

4. Composant de véhicule automobile selon l'une quelconque des revendications précédentes, **caractérisé en ce que** le revêtement sol-gel (2) présente une épaisseur de 0,5 µm à 5 µm.

5. Véhicule automobile avec un composant de véhicule automobile selon une ou plusieurs des revendications précédentes.
